# EUROPEAN PATENT APPLICATION

(11) **EP 2 469 674 A1**
(43) Date of publication of application: **27.06.2012**
(21) Application number: 10382341.5
(22) Date of filing: 21.12.2010
(51) Int. Cl.: H02H 3/33, H01H 83/04

(54) **Protective device for electrical installations**

(71) Applicant: Aguirre Trigo, Miguel, 28043 Madrid (ES)
(72) Inventor: Aguirre Trigo, Miguel, 28043 Madrid (ES)
(74) Representative: ABG Patentes, S.L.

(57) **Abstract**

The invention relates to a protective device for electrical installations for protecting against at least one type of fault, comprising at least two detection means (1, 1') for detecting each type of fault against which the electrical installation is to be protected; and at least two power supply breaker means (3, 3') for interrupting the power supply to the electrical installation in response to instructions (2, 2') from the detection means (1, 1'), the power supply breaker means being configured in parallel, and wherein the connections (2, 2') between the detection means (1, 1') and the current breaker means (3, 3') are established such that the actuation of a single detection means (1) for detecting a type of fault does not cause the opening of all the current breaker means (3, 3') and the simultaneous actuation of all the detection means (1, 1') for detecting a type of fault causes the opening of all the current breaker means (3, 3').

## Description

### Technical Field of the Invention

The present invention relates to a protective device for electrical installations.

### Background of the Invention

There are conflicting needs in the electrical installation sector in terms of the verification of the correct operation of a protective device to assure its reliability throughout its service life, while at the same time installation operation interruptions due to the mentioned verifications are minimized or altogether eliminated.

In the case of residual current circuit breakers, for example, periodic operating verifications are mandatory due to the laws in force. In the case of large or critical installations, the down times caused by interruptions of the supply can lead to considerable associated costs.

There are solutions in the prior art which are based either on performing a partial verification of the protective device, limited to verifying the fault detection sub-system without interrupting the supply, or in complex parallel bridge systems of the protective device involving the existence of a specialized sub-system for coordinating and synchronizing the operations of the protective device and the bridge device such that lack of protection situations do not occur while attempting to maintain the continuity of the service during the verification.

In the first case, the obvious drawback is that a complete testing is not performed, and in the second case it is that a specialized sub-system for the control and coordination of the operations of the protective device and the bridge device is required.

### Summary of the Invention

The present invention provides a solution to the drawback set forth above by means of a protective device for electrical installations according to claim 1. The dependent claims define preferred embodiments of the invention.

A protective device for electrical installations is defined in a first aspect, said device comprising at least two detection means for detecting each type of fault against which the electrical installation is to be protected, and at least two power supply breaker means for interrupting the power supply to the electrical installation in response to instructions from the detection means, the power supply breaker means being configured parallel to one another. The protective device for electrical installations is configured such that the connections between the detection means and the power supply breaker means are established in such a way that the actuation of a single detection means for detecting a type of fault does not cause the opening of all the power supply breaker means, whereas the simultaneous actuation of all the detection means for detecting a type of fault causes the opening of all the power supply breaker means.

In the context of the present invention, device will be understood both as an apparatus integrally containing its constituent elements and as a plurality of modular elements which are interconnected to carry out the desired functionality.

The protection of electrical installations can be oriented towards any of the faults which may typically occur in an electrical installation, such as excess currents, ground current leakages, excess voltages, series, parallel or combined arc fault currents, power supply voltage values out of the range specified for the installation, overloads and/or short-circuits.

In one embodiment, the protective device for installations comprises at least two test or verification means configured to cause the opening of at least one power supply breaker means. The verification means can cause the opening of the at least one power supply breaker means in a direct manner, acting directly on the power supply breaker means and/or in an indirect manner, by means of the simulation of a fault on at least one of the detection means.

Protection against more than one type of fault in the protective device can be implemented.

The device of the invention is characterized by incorporating redundancy in its constituent sub-systems. This redundancy is organized such that it allows verifying the correct operation of the parts of the system while the rest of it has the possibility of maintaining the supply of energy to the installation that is to be protected.

The solutions existing in the prior art have barely been implemented because they are either limited to a partial verification or they require complex coordination and control systems which must still demonstrate their reliability. In contrast, the device of the invention can combine fault detection and power supply breaker technologies with well known reliability and available for mass production at a low cost, using them redundantly and such that the purpose of building a device which can be verified without interrupting the electric power supply is achieved on the sole condition of verifying it in parts, sub-system by sub-system being able to verify it in its entirety.

Furthermore, the redundancy inherent to the device means that in the event of any of the sub-systems failing due to wear or a manufacturing defect, the remaining sub-systems can continue to provide service until the relevant repair is made, which is a particularly important factor for critical installations which require maximizing their availability.

In the event that the reduction of reliability associated with the multiplication of sub-systems is questioned, it must be noted that only one of the parts of the system has to remain operating outside the brief testing periods.

### Brief Description of the Drawings

To complement the description that will be provided below and for the purpose of aiding to better understand the features of the invention, a set of drawings is attached to the present specification in which the following has been depicted with an illustrative and non-limiting character:
Figure 1 shows a schematic depiction of the device of the invention.
Figure 2 shows an embodiment of the protective device according to the invention.

### Embodiments of the Invention

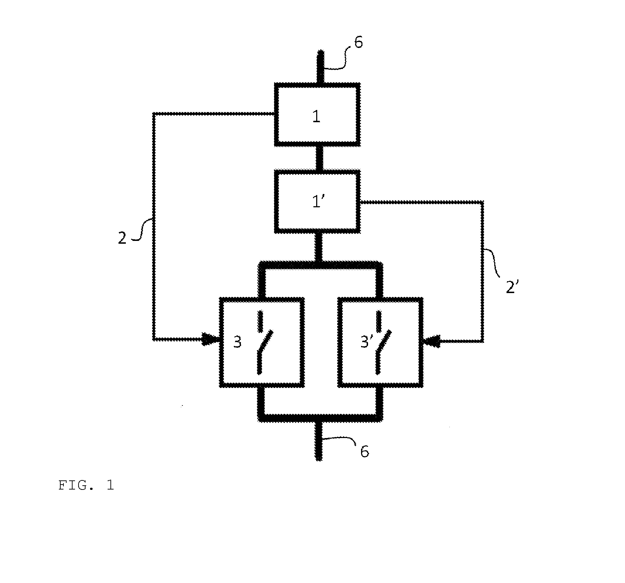

Figure 1 schematically depicts an embodiment of the device of the invention, including two detection sub-systems (1, 1') and two current breaker sub-systems (3, 3'). The detection sub-systems (1, 1') detect the type of fault against which the electrical installation is to be protected. Both detection sub-systems (1, 1') must be for detecting the same type of fault, but not necessarily identical. Nor do the current breaker sub-systems (3, 3') have to be identical to one another. The detection sub-systems (1, 1') can cause the opening (2, 2') of an at least equal or larger number of current breaker sub-systems (3, 3') for interrupting the supply of energy to the electrical installation. In a particular embodiment, each of the detection sub-systems (1, 1') controls only one of the current breaker sub-systems (3, 3').

The protective device must be implemented in series with the feed line without prejudging whether the power supply and the load are connected, respectively, "up" or "down". In Figure 1, the feed lines (6) have been depicted as a single stroke, without prejudging whether they are single-phased, three-phased, AC, DC or another type of feed line.

For the case of faults associated with the current feeding the installation to be protected (e.g. excess currents or current leakages), the detection means (1, 1') serving to detect the presence of a type of fault are implemented in series on the lines (6) feeding the electrical installation, such that they all equally sense the current that reaches the installation.

Similarly, for the case of faults associated with the voltage feeding the installation that is to be protected (e.g. excess supply voltages or insufficient supply voltages) the detection means (1, 1') serving to detect the presence of a type of fault are connected in parallel to the feed lines (6) such that they all equally sense the voltage feeding the installation.

The device of the present invention allows detecting and protecting the electrical installation against residual or leakage currents, series, parallel or combined electric arc faults, overloads and/or short-circuits and power supply voltage values out of the range specified for an installation, among others.

The current breaker sub-systems (3, 3') are implemented in parallel, in a way that only if they are all in the "open" state, preventing the energy from reaching the installation, is the installation left without an electric power supply/disconnected from the power supply.

The associations (2, 2') between the detection sub-systems (1, 1') and the current breaker sub-systems (3, 3') are established such that:
- The actuation of a single detection sub-system (1) for detecting a determined type of fault (for example, simulating a fault on it while testing the correct operation of the protective device) does not cause the opening of all the current breaker sub-systems (3, 3').
- The simultaneous actuation of all the detection sub-systems (1, 1') for detecting a determined type of fault (for example, in the case of a real fault which is sensed by all the detection sub-systems (1, 1')) does cause the opening of all the current breaker sub-systems (3, 3'), assuring the interruption of the supply of energy to the electrical installation.

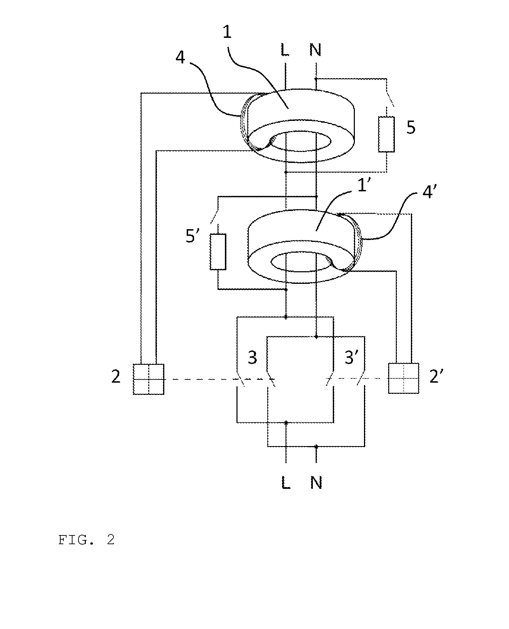

Figure 2 shows an example of a protective device according to the invention, particularly a circuit breaker for single-phase installations (Line or Phase + Neutral) with redundancy 2+2, i.e., two differential current sensors (1, 1') and two sets of contacts (3, 3') for interrupting the current (2, 2') and the capacity to be tested without needing to interrupt the supply of energy to the electrical installation to be protected. The presented diagram is simplified in some aspects for greater clarity. The phase conductors (L) and neutral conductors (N) form the primary circuit feeding the electrical installation to be protected.

The main elements forming the protective device of Figure 2 are common to those of a typical circuit breaker (though duplicated/redundant). The protective device is placed in series between the power supply and the installation (load), the power supply being able to be connected both in the upper terminals and in the lower terminals, indistinctly.

The protective device of Figure 2 comprises two detection means (1, 1'), particularly two instrument transformers for the differential current (1, 1'), two sets of switch contacts (3, 3'), two actuating elements (2, 2') to operate the opening of the sets of switch contacts (3, 3'), secondary windings (4, 4') of the instrument transformers and two test or verification circuits (5, 5'). The reference numbers without an apostrophe and with an apostrophe refer respectively to the main sub-system and to the redundant sub-system.

If the current flowing towards the electrical installation through the phase wire (L) is not equal to the one that returns through the neutral wire (N), for example due to a current leakage in the installation towards ground caused by a fault in the insulation, a magnetic field is generated in the core of the transformers (1, 1') proportional to the leaked current intensity, given by the difference between the currents circulating through the phase wire (L) and through the neutral wire (N). Said field in turn generates the occurrence of electromotive force in the secondary windings (4, 4') which, if it reaches a value predefined as the maximum allowed, will cause the actuation of the actuating elements (2, 2') and the opening of the switch contacts (3, 3'), interrupting the current flow.

The actuating elements (2, 2') cause the opening of the switch contacts (3, 3') depending on the level of leakage/differential current detected by the associated transformer (1, 1'). They typically consist of an electromechanical relay or of an electronic circuit activating an electromagnet.

The protective device of Figure 2 furthermore has two test circuits (5, 5'). When one of the circuits (5) is closed, it causes the occurrence of a current which simulates a differential leakage and causes the actuation of the corresponding actuating element (2) and the opening of the switch contact (3). The correct operation of the protective device is thus verified. When this test circuit (5) is closed, current circulates through the instrument transformer through only one of the primary conductors, the current returning outside the transformer.

The occurrence of a real fault in the electrical installation to be protected causes the occurrence of a difference of currents between the phase conductor (L) and neutral conductor (N) that is equal for both instrument transformers (1, 1'). In such situation, the actuation of the two actuating elements (2, 2') will be provided resulting in the opening of all the sets of contacts (3, 3') that are closed at that time and in efficient protection of the installation.

If the correct operation of the circuit breaker is to be verified in the absence of fault, having both sets of contacts (3, 3') closed, the connection of one of the test circuits (5') causes the occurrence of a difference of current between the phase and neutral conductors traversing the associated instrument transformer (4'), resulting in the activation of one of the circuit breaker elements (2') and the opening of only one of the sets of contacts (1'). The operation of the entire chain of elements is thus verified without interrupting the supply to the installation, which remains fed through the other set of contacts (1).

The other chain of protective elements can symmetrically be verified maintaining the supply to the electrical installation, which remains fed through the other sub-system.

In the event of detection of a poor operation of either of the two chains of protective elements, such chain can be disabled opening its set of contacts and as a result of the redundancy, the installation remains in service and protected until being able to make the corresponding repair.

Finally, the service life of the circuit breaker in relation to a standard model is increased because it is possible to distribute the wear associated with the repeated connecting and opening operations between the two chains of protective elements, making alternating use of said chains.

## Claims

1. A protective device for electrical installations for protecting against at least one type of fault, comprising:
at least two detection means (1, 1') for detecting each type of fault against which the electrical installation is to be protected; and
at least two current breaker means (3, 3') for interrupting current to the electrical installation in response to instructions (2, 2') from the detection means (1, 1'), the power supply breaker means being configured in parallel, and wherein the connections (2, 2') between the detection means (1, 1') and the current breaker means (3, 3') are established such that:
the actuation of a single detection means (1) for detecting a type of fault does not cause the opening of all the current breaker means (3, 3'); and
the simultaneous actuation of all the detection means (1, 1') for detecting a type of fault causes the opening of all the current breaker means (3, 3').

2. The protective device for electrical installations for protecting against at least one type of fault according to claim 1, comprising at least two verification circuits (5, 5') configured to cause the opening of at least one power supply breaker means (3, 3').

3. The protective device for electrical installations according to one of the preceding claims, wherein the detection means (1, 1') for detecting a fault are detection means for detecting residual current to protect the electrical installation against residual or leakage currents.

4. The protective device for electrical installations according to one of the preceding claims, wherein the detection means (1, 1') for detecting a fault are detection means for detecting series, parallel or combined arc fault.

5. The protective device for electrical installations according to one of the preceding claims, wherein the detection means (1, 1') for detecting a fault are detection means for detecting overloads and/or short-circuits.

6. The protective device for electrical installations according to one of the preceding claims, wherein the detection means (1, 1') for detecting a fault are detection means for detecting power supply voltage values out of the range specified for an installation.

7. A protective system for electrical installations comprising any one combination of at least two protective devices according to the preceding claims.
